(19) Europäisches Patentamt
European Patent Office
Office européen des brevets

(11) Veröffentlichungsnummer: **0 005 222**
**B1**

(12) # EUROPÄISCHE PATENTSCHRIFT

(45) Veröffentlichungstag der Patentschrift: **09.02.83**

(51) Int. Cl.³: **C 09 B 63/00,** C 08 K 5/42 // C09B29/42, C07C99/00

(21) Anmeldenummer: **79101203.2**

(22) Anmeldetag: **20.04.79**

(54) **Azofarbstoffsulfonsäuresalze und deren Verwendung.**

(30) Priorität: **28.04.78 CH 4652/78**

(43) Veröffentlichungstag der Anmeldung:
**14.11.79 Patentblatt 79/23**

(45) Bekanntmachung des Hinweises auf die Patenterteilung:
**09.02.83 Patentblatt 83/6**

(84) Benannte Vertragsstaaten:
**CH DE FR GB IT**

(56) Entgegenhaltungen:
**CH-A-337 284**
**CH-A-568 374**
**DE-A-1 956 142**
**DE-A-2 545 828**
**FR-A-2 132 123**
**FR-A-2 147 192**
**FR-A-2 309 603**
**FR-A-2 338 310**
**Kirk-Othmer, Encyclopedia of Chemical Technology, Third Edition, Vol. 3, p. 428–9**
**Colour Index, Third Edition, Vol. 3, p. 3563–4**

(73) Patentinhaber: **CIBA-GEIGY AG, Patentabteilung Postfach, CH-4002 Basel (CH)**

(72) Erfinder: **Lienhard, Paul, Dr., Im Kirschgarten 14, CH-4402 Frenkendorf (CH)**
Erfinder: **Hegar, Gert, Dr., Im Tiergärtlein 1, CH-4124 Schönenbuch (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 005 222 B1

## Azofarbstoffsulfonsäuresalze und deren Verwendung

Azofarbstoffsulfonsäuresalze der Formel

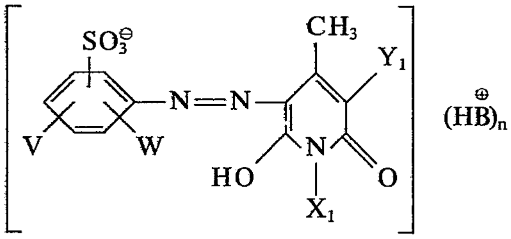
(1)

worin V H— oder $-SO_3^{\ominus}$, W H, Methyl oder $C_1-C_4$-Alkoxy, $Y_1$ CN oder $CONH_2$, $X_1$ H, Alkyl-, Hydroxyalkyl, Alkoxyalkyl oder Cyanalkyl mit 1–18 C, Cycloalkyl mit 6–10 C, Aralkyl mit 7–10 C oder gegebenenfalls durch Halogen, $C_1-C_6$-Alkyl- oder -Alkoxy substituiertes Phenyl, n 1 oder 2 und $HB^{\oplus}$ einen Rest der Formel

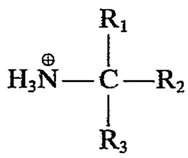
(2)

worin $R_1$, $R_2$ und $R_3$ Alkylreste mit zusammen 7–24 C-Atomen darstellen

oder

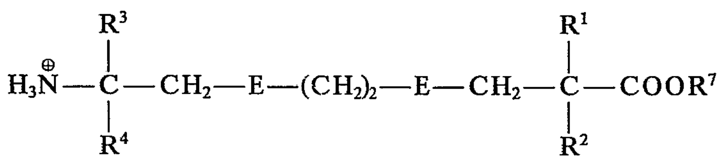
(3)

worin $R^1$ und $R^3$ unabhängig voneinander Wasserstoff oder einen geradkettigen oder verzweigten Alkylrest mit 1–8 C-Atomen, $R^2$ einen geradkettigen oder verzweigten Alkylrest mit 1–8 C-Atomen und $R^4$ einen geradkettigen oder verzweigten Alkylrest mit 1–18 C-Atomen darstellen oder $R^1$ und $R^2$ und/oder $R^3$ und $R^4$ zusammen mit dem Bindungs-C-Atom einen cycloaliphatischen Ring mit 4–8 C-Atomen bilden, und worin E jeweils einen der Reste

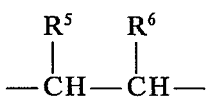 oder 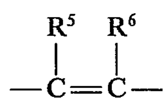

bedeutet, in denen $R^5$ und $R^6$ unabhängig voneinander für Wasserstoff oder Alkyl mit 1–4 C-Atomen stehen und $R^7$ einen geradkettigen oder verzweigten Alkylrest mit insgesamt 1 bis 18 C-Atomen darstellt. Steht $X_1$ für Cycloalkyl, so handelt es sich vornehmlich um Cyclohexyl; steht $X_1$ für Aralkyl, so handelt es sich vornehmlich um eine Phenalkylgruppe mit 1–4 C-Atomen im Alkylrest.

Zu den erfindungsgemäßen Farbsalzen gelangt man, wenn man die entsprechende Azofarbstoffmono- oder disulfonsäure mit 1 bzw. 2 Mol des Amins B umsetzt.

Die Azofarbstoffsulfonsäuren stellen bekannte Verbindungen dar, die man erhält durch Kuppeln einer Diazoverbindung eines Amins der Formel

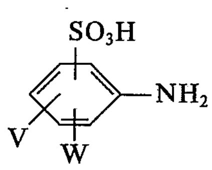
(5)

mit einem Pyridon der Formel

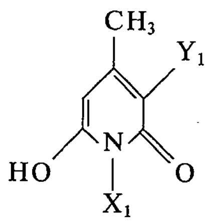

(6)

oder einer dazu tautomeren Formel, worin V, W, $X_1$ und $Y_1$ die angegebene Bedeutung haben.

Als Beispiele seien die folgenden Amine aufgeführt:

Anilin-2-, 3- oder 4-sulfonsäure
Anilin-2,4-disulfonsäure
Anilin-2,5-disulfonsäure
4-Methyl-anilin-2-sulfonsäure
2-Methyl-anilin-4-sulfonsäure.

Als Beispiele von Kupplungskomponenten seien die folgenden Pyridone genannt:

2,6-Dihydroxy-4-methyl-pyridin
2,6-Dihydroxy-5-cyan-4-methylpyridin
1,4-Dimethyl-2-hydroxy-5-cyan-pyridon-6
1-Äthyl-2-hydroxy-4-methyl-5-cyan-pyridon-6
1-Isopropyl-2-hydroxy-4-methyl-5-cyan-pyridon-6
1-n-Butyl-2-hydroxy-4-methyl-5-cyan-pyridon-6
1-n-Octyl-2-hydroxy-4-methyl-5-cyan-pyridon-6
1-n-Octadecyl-2-hydroxy-4-methyl-5-cyan-pyridon-6
1-Benzyl-2-hydroxy-4-methyl-5-cyan-pyridon-6
1-Cyclohexyl-2-hydroxy-4-methyl-5-cyan-pyridon-6
1-Phenyl-2-hydroxy-4-methyl-5-cyan-pyridon-6
1-p-Toluyl-2-hydroxy-4-methyl-5-cyan-pyridon-6
1-Hydroxyäthyl-2-hydroxy-4-methyl-5-cyan-pyridon-6
1-Cyanäthyl-2-hydroxy-4-methyl-5-cyan-pyridon-6
1-Methoxyäthyl-2-hydroxy-4-methyl-5-cyan-pyridon-6
1-Methoxypropyl-2-hydroxy-4-methyl-5-cyan-pyridon-6
1-Isopropoxypropyl-2-hydroxy-4-methyl-5-cyan-pyridon-6
1-Äthyl-2-hydroxy-4-methyl-5-carbamoyl-pyridon-6.

Die Diazotierung erfolgt auf übliche Art mit Nitrit in mineralsaurer Lösung. Die Kupplung wird vorteilhaft in schwach saurem bis schwach alkalischem Medium durchgeführt. Die erhaltenen Azofarbstoffe können durch Aussalzen ausgefällt und abfiltriert oder durch Zugabe des Amins direkt ins Aminsalz übergeführt werden, welches in Wasser nur wenig löslich ist und durch Abfiltrieren isoliert werden kann.

Als Beispiele von Aminen der Formel

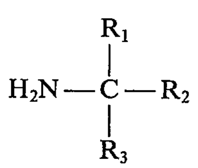

worin $R_1$, $R_2$ und $R_3$ die angegebene Bedeutung haben, seien die unter dem Handelsnamen Primene 81-R® und Primene JM-T® der Firma Rohm & Haas erhältlichen Mischungen von Aminen genannt.

Als Beispiele von Aminen der Formel

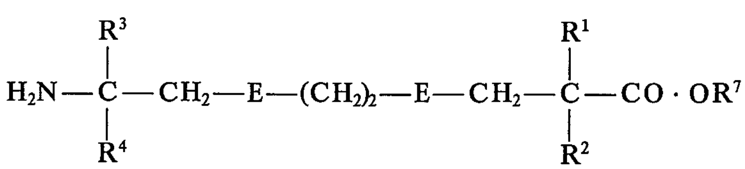

(7)

worin E, $R^1$, $R^3$, $R^4$ und $R^7$ die angegebene Bedeutung haben seien genannt:

11-Amino-2,2-dimethyl-tridecansäuremethylester (Sdp. 78 – 80° C/0,07 mbar, $n_D^{20}$ = 1,4494);

11-Amino-2,2-dimethyl-tridecansäure-n-pentylester (Sdp. 126 – 128° C/0,03 mbar, $n_D^{20}$ = 1,4494);

11-Amino-2,2-dimethyl-tridecansäure-isopropylester (Sdp. 95° C/0,013 mbar, $n_D^{20}$ = 1,4469);

11-Amino-2,2,12-trimethyl-tridecansäuremethylester (Sdp. 106 – 107° C/0,04 mbar, $n_D^{20}$ = 1,4511);

11-Amino-2,2,12-trimethyl-tridecansäure-n-pentylester (Sdp. 138 – 139° C/0,013 mbar, $n_D^{20}$ = 1,4505);

11-Aminotrideca-4,8-diensäure-methylester (Sdp. 106 – 108° C/0,3 bar, $n_D^{20}$ = 1,4754).

Die Herstellung der Verbindungen der Formel (7) erfolgt in der Weise, daß man ein 1-Aza-cyclododecen der Formel (8)

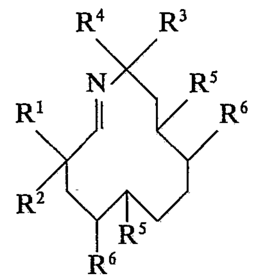

(8)

oder ein 1-Aza-1,5,9-cyclododecatrien der Formel

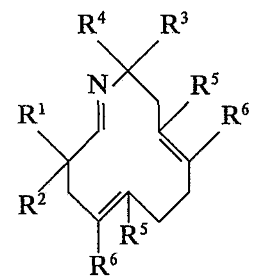

(9)

in wässerigem oder wäßrig-organischem Medium in Gegenwart einer anorganischen Säure nach an sich bekannten Verfahren zu Verbindungen der Formel

$$\left[ H_2N-\overset{R^3}{\underset{R^4}{C}}-CH_2-E-(CH_2)_2-E-CH_2-\overset{R^1}{\underset{R^2}{C}}-CHO \right]_n \overset{\oplus}{H} \quad X^{\ominus}_{2\,n} \qquad (10)$$

umsetzt, wobei in den Formeln (8) – (10) für $R_1$ bis $R_6$ und E das bei Formel (7) Angegebene gilt, X das Anion der anorganischen Säure und n eine der Wertigkeit von $X_2$ entsprechende ganze Zahl darstellen, und anschließend die Verbindungen der Formel (10) zu den jeweiligen 11-Amino-undecansäuren oder 11-Amino-undeca-4,8-diensäure oxydiert und in einer 3. Reaktionsstufe die jeweils erhaltenen Säuren nach an sich bekannten Verfahren mit einem Alkohol der Formel $R^7OH$, worin $R^7$ einen geradkettigen oder verzweigten Alkylrest mit insgesamt 1 bis 18 C-Atomen bedeutet, zu den entsprechenden Estern der Formel (7) umsetzt.

Die Salzbildung führt man zweckmäßig in der Weise durch, daß man eine Lösung oder Suspension eines Alkalisalzes der Farbstoffsulfonsäure mit der wäßrigen Lösung eines wasserlöslichen Salzes des Amins, vorzugsweise eines solchen mit einer niederen Fettsäure, insbesondere der Ameisensäure oder Essigsäure, umsetzt. Man arbeitet mit Vorteil bei Temperaturen zwischen 40 – 80° C und einem pH-Wert unterhalb 7.

Da die Farbsalze im wäßrigen Reaktionsmedium unlöslich sind, können sie durch Abfiltrieren isoliert werden.

Man kann die Umsetzung aber auch in organischen Lösungsmitteln allein oder in Gemischen mit Wasser durchführen. Eine bevorzugte Ausführungsform besteht darin, daß man zu einer wäßrigen

Lösung oder Suspension eines Alkalisalzes der Farbstoffsulfonsäure die Lösung des Amins in einem nur beschränkt wasserlöslichen organischen Lösungsmittel gibt, das Ganze mit einer anorganischen oder organischen Säure sauer stellt und intensiv durchmischt. Das Aminsalz der Farbstoffsulfonsäure geht dabei in die organische Phase und kann nach Schichtentrennung durch Verdampfen des Lösungsmittels isoliert werden. Die Umsetzung im Zweiphasensystem wird bei Temperaturen zwischen 10° und dem Siedepunkt des Lösungsmittel-Wasser-Gemischs vorgenommen. Als organische Lösungsmittel werden vorzugsweise chlorierte Kohlenwasserstoffe wie Methylenchlorid, Chloroform oder Chlorbenzol, Äther wie Diisopropyl- oder Dioctyläther, Ketone wie Methylisobutyl- oder Diisopropylketon, Ester wie Äthylacetat, Butylacetat oder t-Butylpropionat oder aber Alkohole wie n-Butanol, i- oder t-Amylalkohol verwendet.

Die neuen Farbsalze weisen eine ausgezeichnete Alkohollöslichkeit auf, insbesondere in niederen Alkanolen, wie Methanol, Äthanol, n-Propanol oder iso-Propanol, in Alkylenglykolmonoalkyläthern, z. B. in Äthylen-glykol-monomethyl- oder -äthyläther, in Alkylenglykolen, wie in Propylenglykolen, oder in araliphatischen Alkoholen, wie in Benzylalkohol, oder in Gemischen derartiger Alkohole, ferner in niederen aliphatischen Ketonen, z. B. Aceton, Methyläthylketon, Methylisobutylketon oder auch in Cyclohexanon, ferner in Carbonsäureestern, z. B. Methylacetat, Äthylacetat, Butylacetat oder Glykolmonoacetat, sowie in halogenierten Kohlenwasserstoffen, vorzugsweise niederen aliphatischen Kohlenwasserstoffen, wie Chloroform, Methylenchlorid, Äthylenchlorid oder Kohlenstofftetrachlorid.

Wegen ihrer guten Löslichkeit in den obengenannten Ketonen, besonders Aceton, eignen sich die erfindungsgemäß erhältlichen Farbsalze zum Färben von Cellulose-2½-acetat in der Spinnmasse; dank ihrer guten Löslichkeit in halogenierten, niederen aliphatischen Kohlenwasserstoffen, besonders Chloroform und Methylenchlorid/Methanol 9 : 1, können sie auch für die Spinnfärbung von Cellulosetriacetat verwendet werden. Das spinngefärbte Fasermaterial zeichnet sich durch Reinheit und Stärke des Farbtons, durch einwandfreie Verteilung des Farbkörpers und durch sehr gute Echtheiten wie beispielsweise hohe Wasch-, Wasser-, Bleich-, Überfärbe-, Trockenwasch-, Reib-, Bügel-, Trockenhitze- und Lichtechtheit aus.

Infolge ihrer guten Löslichkeit in Alkoholen, Estern sowie deren Mischungen, sind die neuen Farbsalze besonders geeignet zum Färben von filmbildenden Polymeren.

Als alkoholische und/oder esterhaltige Lösungen filmbildender Polymerer sind hier insbesondere solche flüssige Lacke zu verstehen, die sich zur Verwendung in Druckfarben für den Flexodruck eignen. Als Polymere enthalten diese Lösungen beispielsweise Naturharze, wie Schellack oder Manilakopal; oder Cellulosederivate, beispielsweise Celluloseähter, wie Äthylcellulose oder Celluloseester, wie Nitrocellulose, ferner Maleinatharze oder Phenol-Formaldehyd-harze, die vorzugsweise mit Kolophonium modifiziert sind, wie die in der US-A-2 347 923 beschriebenen Produkte; Polyamidharze, d. h. Polykondensationsprodukte von Polyaminen mit Polycarboxyverbindungen, die z. B. in der US-A-2 663 649 beschrieben sind; Formaldehyd-Harnstoff- und Formaldehyd-Melamin-Kondensate, Keton-Formaldehyd-Kondensate, Polyvinylacetate oder Polyacrylsäureharze, z. B. Polybutylacrylatharz oder deren Gemische; ferner Polykondensationsprodukte mehrwertiger Alkohole, wie Glycerin oder Pentaerythrit, mit mehrbasischen Säuren, wie Maleinsäure oder Phthalsäure allein oder in Kombination mit ungesättigten Fettsäuren wie jenen des Lein- und Ricinusöls.

Daneben können die Lösungen filmbildender Polymerer noch in der Lackindustrie übliche Hilfsstoffe, wie Netzmittel, z. B. höhere Fettsäure-bis-hydroxyalkylamide, wie Cocosölfettsäure-bis-(β-hydroxyäthyl)-amid, Weichmacher, wie z. B. Phthalsäureester, und weitere Zusätze, wie Siliconöle, enthalten.

Diese Lösungen filmbildender Polymerer mit einem Gehalt an erfindungsgemäßen Farbsalzen eignen sich beispielsweise zum Bedrucken verschiedenartiger Stoffe, wie von Metall-, z. B. Aluminiumfolien, von Papier, Glas, Kunstharzfolien und -filmen und dergleichen. Die Lösungen filmbildender Polymerer eignen sich weiter zum Lackieren verschiedenster Oberflächen, z. B. von Metallteilen, Formteilen aus Kunststoffen oder Holzplatten. Sie sind lagerbeständig und ergeben auf den genannten Materialien egale, farbstarke und wasserfeste Überzüge.

In der CH-A-337 284 sind gelbe Farbsalze aus Monoazofarbstoffen und organischen Basen beschrieben. Diese bekannten Farbsalze unterscheiden sich von den erfindungsgemäßen durch vier wesentliche Merkmale, nämlich:

1. Die Diazokomponente weist eine Nitrogruppe auf.
2. Die Kupplungskomponente ist ein Pyrazolon.
3. Die Sulfogruppe befindet sich im Rest der Kupplungskomponente.
4. Als Basen dienen Dicyclohexylamin, und Guanidine.

Gegenüber den Ausgangsstoffen der erfindungsgemäßen Farbsalze, z. B. den in der GB-A-1 296 857 beschriebenen Alkalisalzen, zeigen die erfindungsgemäßen Farbsalze den Vorzug einer höheren Löslichkeit in organischen Lösungsmitteln.

## Beispiel 1

38,4 g (0,1 Mol) des Monoazofarbstoffs der Formel

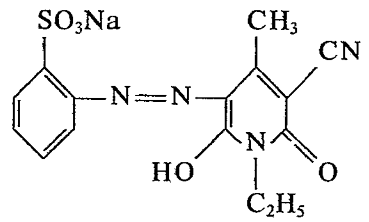

werden in 1000 ml 40° warmem Wasser angeschlämmt. Zur homogenen Suspension läßt man die Lösung von 19,5 g (0,1 Mol) Primene 81-R® (Rohm & Haas) in 200 ml Wasser und 6 ml Ameisensäure 85% zutropfen. Die Reaktionsmischung wird durch Zugabe weiterer Ameisensäure deutlich lackmus-sauer gestellt und einige Stunden bei 40—45° gerührt. Dann wird das erhaltene Farbstoffsalz abfiltriert, gründlich mit Wasser gewaschen und im Vakuum bei 80—90° getrocknet. Es resultieren 53 g eines gelben Pulvers, das sich sehr gut in niederen Alkoholen und Ketonen löst.

## Beispiel 2

Ein ähnliches Farbsalz mit ebenfalls guten Löslichkeiten erhält man durch analoge Arbeitsweise, aber unter Verwendung von 0,1 Mol von Primene JM-T® anstelle von Primene 81-R®.

## Beispiel 3

48,6 g (0,1 Mol) des Natriumsalzes des durch Kuppeln von Anilin-2,4-disulfonsäure auf 1-Äthyl-2-hydroxy-4-methyl-5-cyan-pyridon-6 erhaltenen Monoazofarbstoffs werden in 300 ml Wasser und 300 ml Methylisobutylketon eingerührt. Zur Mischung läßt man 38,8 g (0,2 Mol) Primene 81-R® (Rohm & Haas) und Ameisensäure bis zu einem pH-Wert von 3,5—4 zutropfen. Man rührt das Ganze während 1 Std. bei 40—45°, trennt die beiden Phasen und wäscht die organische Phase mit 250 ml Wasser. Das durch Abdestillieren des Lösungsmittels erhältliche gelbe Farbstoffsalz wiegt nach dem Trocknen im Vakuum bei erhöhter Temperatur 68 g. Es ist in den gebräuchlichen Lösungsmitteln der Druckfarben- und Lackindustrie, wie z. B. in Aceton, Methanol, Äthanol, Isopropanol, n-Butanol, Benzylalkohol, Äthylenglykolmonomethyl- und -monoäthyläther, sowie in Lösungsmittelgemischen wie Äthanol/Toluol 70 : 30, Äthanol/Äthylenglykolmonoäthyläther 85 : 15, Äthanol/Äthylacetat 50 : 50, Methylenchlorid/Methanol 9 : 1 sehr gut löslich. Die damit erhaltenen Druckfarben, gefärbten Lacke und Acetatfasern zeichnen sich durch einen reinen, gelben Farbton aus.

## Beispiel 4

In der nachfolgenden Tabelle 1 sind weitere Farbsalze aufgeführt, die man erhält, wenn man das in Kolonne II aufgeführte Amin diazotiert, mit dem in Kolonne III angegebenen Pyridon kuppelt und das Natriumsalz der erhaltenen Azofarbstoffsulfonsäure mit dem in Kolonne IV angegebenen Amin nach dem in Beispiel 3 angegebenen Verfahren umsetzt. Kolonne V gibt die Nuance der mit dem Farbsalz erhaltenen Druckfarben an.

Tabelle 1

| Bsp. | Diazokomponente | Kupplungskomponente | Amin | Farbe |
|---|---|---|---|---|
| 5 | Anilin-2,4-disulfonsäure | 1-Äthyl-2-hydroxy-4-methyl-5-cyan-pyridon-6 | Primene JM-T® | gelb |
| 6 | Anilin-2,4-disulfonsäure | 2,6-Dihydroxy-4-methyl-5-cyan-pyridin | Primene 81-R® | gelb |
| 7 | Anilin-2,4-disulfonsäure | 2,6-Dihydroxy-4-methyl-5-cyan-pyridin | Primene JM-T® | gelb |
| 8 | Anilin-2,5-disulfonsäure | 2,6-Dihydroxy-4-methyl-5-cyan-pyridin | Primene 81-R® | gelb |
| 9 | Anilin-2,5-disulfonsäure | 2,6-Dihydroxy-4-methyl-5-cyan-pyridin | Primene JM-T® | gelb |
| 10 | Anilin-2,5-disulfonsäure | 1-Äthyl-2-hydroxy-4-methyl-5-cyan-pyridon-6 | Primene 81-R® | gelb |
| 11 | Anilin-2,5-disulfonsäure | 1-Äthyl-2-hydroxy-4-methyl-5-cyan-pyridon-6 | Primene JM-T® | gelb |
| 12 | Anilin-2-sulfonsäure | 1-Äthyl-2-hydroxy-4-methyl-5-sulfomethyl-pyridon-6 | Primene 81-R® | gelb |

Beispiel 13

40,1 g (0,1 Mol) des Kaliumsalzes des durch Kuppeln von Sulfanilsäure auf 1-Äthyl-2-hydroxy-4-methyl-5-can-pyridon-6 erhaltenen Monoazofarbstoffs werden in 1200 ml Wasser angeschlämmt. Zur Suspension läßt man bei Raumtemperatur die Lösung von 32,8 g (0,1 Mol) Primene JM-T® (Rohm & Haas, mittleres Molekulargewicht 297, Gehalt aus Säuretitration 90,5%) in 250 ml Wasser und 7 ml 85%ige Ameisensäure zutropfen. Zur Reaktionsmischung gibt man weitere Ameisensäure bis zu einem pH-Wert von 4–4,5, setzt dann 750 ml Butanol zu und rührt bei 40–45°, bis sich das Farbsalz im Butanol gelöst hat. Man trennt die Butanolphase im Scheidetrichter ab, wäscht sie zweimal mit Wasser und dampft sie ein. Der Rückstand wird schließlich im Vakuum getrocknet. Er wiegt 67 g und stellt ein pulverisierbares gelb-braunes Produkt dar. Dieses ist in Äthanol, Aceton, Äthylacetat sowie im Lösungsmittelgemisch Methylenchlorid/Methanol 9 : 1 sehr gut löslich. Lackformulierungen, die das Farbsalz, Lösungsmittel und Nitrocellulose resp. Acetylcellulose oder ein Alkyd-Melamin-Harz enthalten, liefern auf Papier oder Metalloberflächen sehr farbstarke reine gelbe Ausfärbungen.

In der nachfolgenden Tabelle 2 sind weitere Farbsalze aufgeführt, die man erhält, wenn man das in Kolonne II angegebene Amin diazotiert, mit dem in Kolonne III angegebenen Pyridon kuppelt und das Alkalisalz der erhaltenen Azofarbstoffsulfonsäure nach dem im Beispiel 13 beschriebenen Verfahren mit dem in Kolonne IV angegebenen Amin umsetzt. Kolonne V gibt die Nuance der mit dem Farbsalz erhaltenen Druckfarbe.

Tabelle 2

| Bsp. | Diazokomponente | Kupplungskomponente | Amin | Farbe |
|---|---|---|---|---|
| 14 | 2-Methoxy-4-nitro-anilin-6-sulfonsäure | 2,6-Dihydroxy-4-methyl-5-cyan-pyridin | Primene JM-T® | rotst. gelb |
| 15 | Anilin-3-sulfonsäure | 2,6-Dihydroxy-4-methyl-5-cyan-pyridin | Primene JM-T® | gelb |
| 16 | Anilin-3-sulfonsäure | 1-Äthyl-2-hydroxy-4-methyl-5-cyan-pyridon-6 | Primene JM-T® | gelb |
| 17 | Sulfanilsäure | 1-n-Butyl-2-hydroxy-4-methyl-5-cyan-pyridon-6 | Primene 81-R® | gelb |
| 18 | Sulfanilsäure | 1-Benzyl-2-hydroxy-4-methyl-5-cyan-pyridon-6 | Primene 81-R® | gelb |

Beispiele 19—29

In der nachfolgenden Tabelle 3 sind weitere Farbsalze aufgeführt, die man erhält, wenn man das in Kolonne II angegebene Amin diazotiert, mit dem in Kolonne III angegebenen Pyridon kuppelt und das Natriumsalz der erhaltenen Azofarbstoffsulfonsäure nach dem in den vorangehenden Beispielen beschriebenen Verfahren mit dem in Kolonne IV angegebenen Amin umsetzt. Kolonne V gibt die Farbe der mit dem Farbsalz erhaltenen Druckfarbe.

Tabelle 3

| Bsp. | Diazokomponente | Kupplungskomponente | Amin | Farbe |
|---|---|---|---|---|
| 19 | 4-Nitroanilin-2-sulfonsäure | 2,6-Dihydroxy-4-methyl-cyan-pyridin | Primene 81-R® | gelb |
| 20 | Anilin-2-sulfonsäure | 2,6-Dihydroxy-4-methyl-cyan-pyridin | Primene 81-R® | gelb |
| 21 | Anilin-2-sulfonsäure | 2,6-Dihydroxy-4-methyl-cyan-pyridin | Primene JM-T® | gelb |
| 22 | Anilin-3-sulfonsäure | 1-Äthyl-2-hydroxy-4-methyl-5-cyan-pyridon-6 | Primene 81-R® | gelb |
| 23 | Anilin-3-sulfonsäure | 2,6-Dihydroxy-4-methyl-5-cyan-pyridin | Primene 81-R® | gelb |
| 24 | 4-Methyl-anilin-2-sulfonsäure | 1-Äthyl-2-hydroxy-4-methyl-5-cyan-pyridon-6 | Primene 81-R® | gelb |
| 25 | Sulfanilsäure | 1-Äthyl-2-hydroxy-4-phenyl-5-cyan-pyridon-6 | Primene 81-R® | gelb |
| 26 | Sulfanilsäure | 1-Äthyl-2-hydroxy-4-methyl-5-dimethylcarbamoyl-pyridon-6 | Primene 81-R® | gelb |
| 27 | 4-Methylanilin-2-sulfonsäure | 1-Äthyl-2-hydroxy-4-methyl-5-äthoxycarbonyl-pyridon-6 | Primene 81-R® | gelb |
| 28 | Sulfanilsäure | 1-Äthyl-2-hydroxy-4-methyl-5-carbamoyl-pyridon-6 | Primene JM-T® | gelb |
| 29 | Sulfanilsäure | 1-Phenyl-2-hydroxy-4-methyl-5-cyan-pyridon-6 | Primene 81-R® | gelb |

## Beispiel 30

5 g des nach Beispiel 3 erhaltenen Farbsalzes werden in 95 g eines Nitrocelluloselackes, hergestellt aus 15 g alkohollöslicher niedrigviskoser Nitrocellulose mit ca. 18% Dibutylphthalat, 10 g Äthylenglykolmonoäthyläther, 20 g Äthylacetat und 50 g 94%igem Äthanol, eingetragen. Die Mischung wird bis zur gleichmäßigen Verteilung des Farbkörpers gerührt. Anschließend wird der Lack mit einem Filmziehgerät (handcoater der Fa. RK Chemical Co. Ltd., Royston, GB) in einer Naßfilmdicke von ca. 12 µm auf Opalinpapier oder auf eine Aluminium-Kaschierfolie aufgetragen. Nach dem Trocknen liegt eine haftfeste, gleichmäßige, kräftig gelbe Lackierung vor, die gegenüber Belichtung sowie Behandlung mit Wasser und Butter hohe Beständigkeiten aufweist.

## Beispiel 31

Es werden 20 g des gemäß Beispiel 3 erhältlichen Farbsalzes, 30 g gebleichter wachsfreier Schellack, 5 g Dibutylphthalat und 45 g Äthanol vermischt.

Man erhält so eine Druckfarbe von guter Lagerbeständigkeit, welche als solche oder in Verdünnung mit Äthanol für den Flexodruck auf Papier- und Aluminiumfolien verwendbar ist. Mit dieser Druckfarbe erhält man auf den genannten Materialien brillante und farbstarke gelbe Drucke von guter Haftfestigkeit.

Beispiel 32

Auf 1000 g einer Lösung von Acetylcellulose in Aceton mit einem Festkörpergehalt von 25% werden 1,3 g des Farbsalzes gemäß Beispiel 3 gestreut. Dann setzt man 20 ml Aceton zu und rollt die Mischung in einer gut verschlossenen Flasche auf den Rollblock bis der Farbstoff vollkommen gelöst ist. Anschließend wird die gefärbte Spinnlösung durch Düsen gepreßt. Der gebildete Faden läuft durch ein längeres geheiztes Rohr und kann dann unmittelbar aufgespult werden. Das gefärbte Material zeigt einen reinen gelben Farbton und weist ausgezeichnete Echtheiten auf, insbesondere einwandfreie Wasch-, Wasser-, Bleich-, Überfärbe-, Trockenwasch-, Reib-, Bügel-, Trockenhitze- und Lichtechtheit.

Beispiele für die Herstellung von Verbindungen der Formel (7)

Beispiel 33

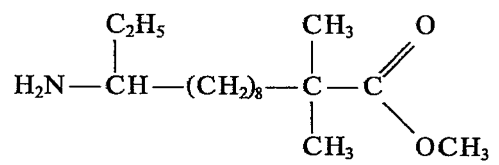

a) 975 g (4,37 Mol) 3,3-Dimethyl-12-äthyl-1-aza-cyclododecen werden innerhalb von ca. 35 Minuten, unter Rühren, zu einer Lösung von 450 g (4,6 Mol) Schwefelsäure in 600 g Wasser eingetropft. Die klare, leicht gelbliche Lösung wird dann während 20 Minuten mit Wasserdampf behandelt, um eventuelle aldehydische Verunreinigungen zu entfernen. Anschließend wird die wäßrige Lösung in einem Autoklaven 3 Stunden bei 50°C unter einem Sauerstoffdruck von 20 bar gerührt. Beim Neutralisieren der sauren Reaktionsmischung mit Natronlauge erhält man 820 g (3,2 Mol) 11-Amino-2,2-dimethyl-tridecansäure, entsprechend einer Ausbeute von 73% d. Th.; Fp. 164 – 165° C;

Analyse für $C_{15}H_{31}NO_2$ (Molgewicht 257,42)

| | | | | |
|---|---|---|---|---|
| berechnet: | C 69,99% | H 12,14% | N 5,44% | O 12,43% |
| gefunden: | C 70,03% | H 12,10% | N 5,54% | – |

MS-Spektrum: Molekül-Peak 257, Bruchstückmassen 228, 182, 140, 58.

b) 51,4 g (0,2 Mol) 11-Amino-2,2-dimethyl-tridecansäure werden zusammen mit 200 ml Methanol und 22 g (0,224 Mol) Schwefelsäure während 3 Stunden unter Rückfluß gekocht. Man destilliert dann das überschüssige Methanol ab, versetzt den Rückstand mit ca. 200 ml Wasser und bringt die Reaktionslösung mit wäßriger Natronlauge auf schwach alkalisch (pH 8 – 10), wobei sich der Aminosäureester als obere organische Phase abscheidet. Bei der anschließenden Destillation erhält man 48,5 g (0,179 Mol) 11-Amino-2,2-dimethyl-tridecansäuremethylester, entsprechend einer Ausbeute von 89,5% d. Th.

Die in der Beschreibung erwähnten weiteren Verbindungen der Formel (7) lassen sich nach ganz analoger Verfahrensweise herstellen.

Beispiele 34 – 40

19,2 g (0,05 Mol) des Monoazofarbstoffs aus diazotierter 2-Aminobenzolsulfonsäure → 1-Äthyl-2-hydroxy-4-methyl-5-cyan-pyridon-6 (Na-Salz) werden in 500 ml Wasser angeschlämmt und tropfenweise mit der Mischung von 17,1 g (0,05 Mol) 11-Amino-2,2,12-trimethyl-tridecansäure-pentylester, 4 ml 85%iger Ameisensäure und 80 ml Wasser versetzt. Man rührt die Suspension einige Stunden bei 45 – 50° C, filtriert sie, wäscht das Filtergut zuerst mit verdünnter Ameisensäure, dann mit Wasser und trocknet es bei 60° C im Vakuum. Der so isolierte Solventfarbstoff obenstehender Formel wiegt 35,7 g. Er ist in Äthanol, Aceton, Äthylacetat und Äthylenglykolmonoäthyläther sehr gut löslich.

Ebenfalls wertvolle gelbe Solventfarbstoffe erhält man bei analoger Arbeitsweise, wenn man anstelle der 0,05 Mol 11-Amino-2,2,12-trimethyl-tridecansäure-pentylester die äquimolekulare Menge eines der in der Beschreibung aufgeführten Amine der Formel (7) einsetzt.

Beispiel 41

48,6 g (0,1 Mol) des Natriumsalzes des durch Kuppeln von diazotierter Anilin-2,4-disulfonsäure auf 1-Äthyl-2-hydroxy-4-methyl-5-cyanpyridon-6 erhaltenen Monoazofarbstoffs werden in 300 ml Wasser und 300 ml Methylisobutylketon eingerührt. Zur Mischung läßt man 68,4 g (0,2 Mol) 2,2-Dimethyl-11-isopropyl-11-amino-undecansäure-pentylester und Ameisensäure bis zu einem pH-Wert von 3,5–4 tropfen. Die weitere Umsetzung und Isolierung des Farbsalzes erfolgt analog Beispiel 3.

**Patentansprüche**

1. Azofarbstoffe der Formel

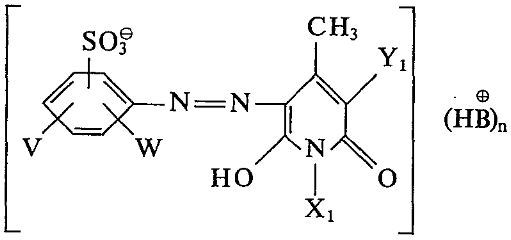

worin V H– oder $-SO_3^{\ominus}$, W H, Methyl oder $C_1-C_4$-Alkoxy, $Y_1$ CN oder $CONH_2$, $X_1$ H, Alkyl-, Hydroxyalkyl, Alkoxyalkyl oder Cyanalkyl mit 1–18 C, Cycloalkyl mit 6–10 C, Aralkyl mit 7–10 C oder gegebenenfalls durch Halogen, $C_1-C_6$-Alkyl- oder -Alkoxy substituiertes Phenyl, n 1 oder 2 und $HB^{\oplus}$ einen Rest der Formel

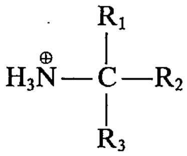

worin $R_1$, $R_2$ und $R_3$ Alkylreste mit zusammen 7–24 C-Atomen darstellen

oder

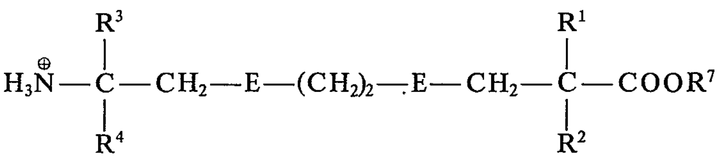

worin $R^1$ und $R^3$ unabhängig voneinander Wasserstoff oder einen geradkettigen oder verzweigten Alkylrest mit 1–8 C-Atomen, $R^2$ einen geradkettigen oder verzweigten Alkylrest mit 1–8 C-Atomen und $R^4$ einen geradkettigen oder verzweigten Alkylrest mit 1–8 C-Atomen darstellen oder $R^1$ und $R^2$ und/oder $R^3$ und $R^4$ zusammen mit dem Bindungs-C-Atom einen cycloaliphatischen Ring mit 4–8 C-Atomen bilden, und worin E jeweils einen der Reste

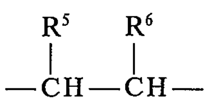 oder 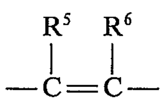

bedeutet, in denen $R^5$ und $R^6$ unabhängig voneinander für Wasserstoff oder Alkyl mit 1–4 C-Atomen stehen und $R^7$ einen geradkettigen oder verzweigten Alkylrest mit insgesamt 1 bis 18 C-Atomen darstellt.

2. Azofarbstoffsalze gemäß Anspruch 1, worin $X_1$ eine Alkylgruppe mit 1–4 C-Atomen und $Y_1$ eine Cyangruppe bedeutet.

3. Verwendung der Farbsalze gemäß Anspruch 1 zum Färben organischer Lösungen von Polymeren.

4. Polymere enthaltend Farbsalze gemäß Anspruch 1.

**Claims**

1. An azo dye of the formula

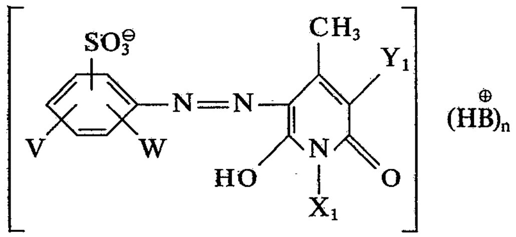

wherein V is hydrogen or $-SO_3^{\ominus}$, W is hydrogen, methyl or $C_1-C_4$-alkoxy, $Y_1$ is CN or $CONH_2$, $X_1$ is hydrogen, alkyl, hydroxyalkyl, alkoxyalkyl or cyanoalkyl of 1 to 18 carbon atoms, cycloalkyl of 6 to 10 carbon atoms, aralkyl of 7 to 10 carbon atoms or phenyl or phenyl which is substituted by halogen, $C_1-C_6$alkyl or $C_1-C_6$alkoxy, n is 1 or 2, and
$HB^{\oplus}$ is a radical of the formula

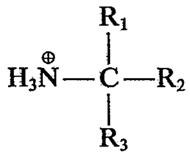

wherein $R_1$, $R_2$ and $R_3$ are alkyl radicals containing together 7 to 24 carbon atoms or

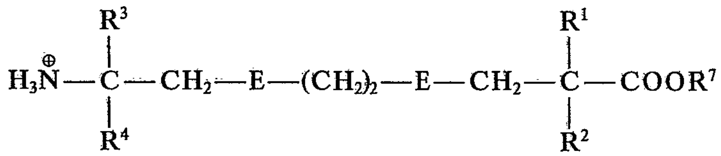

wherein each of $R^1$ and $R^3$ independently of the other is hydrogen or a straight chain or branched alkyl radical of 1 to 8 carbon atoms, $R^2$ is a straight chain or branched alkyl radical of 1 to 8 carbon atoms and $R^4$ is a straight chain or branched alkyl radical of 1 to 8 carbon atoms, or $R^1$ and $R^2$ and/or $R^3$ and $R^4$, together with the carbon atom to which they are attached, form a cycloaliphatic ring of 4 to 8 carbon atoms, and wherein each E is one of the radicals

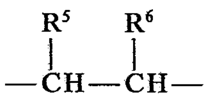 or 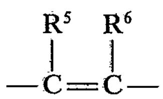

in which each of $R^5$ and $R^6$ independently of the other is hydrogen or alkyl of 1 to 4 carbon atoms, and $R^7$ is a straight chain or branched alkyl radical containing altogether 1 to 18 carbon atoms.

2. An azo dye salt according to claim 1, wherein $X_1$ is an alkyl group of 1 to 4 carbon atoms and $Y_1$ is a cyano group.

3. A method of colouring organic solutions of polymers, which comprises the use of a dye salt according to claim 1.

4. A polymer containing a dye salt according to claim 1.

**Revendications**

1. Colorants azoïques répondant à la formule

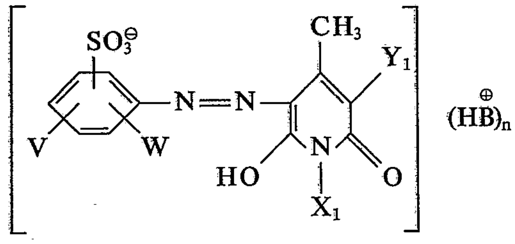

dans laquelle V représente H ou $SO_3^{\ominus}$, W représente H, un méthyle ou un alcoxy en $C_1-C_4$, $Y_1$ représente CN ou $CONH_2$, $X_1$ représente H, un alkyle, un hydroxyalkyle, un alcoxyalkyle ou un cyanalkyle contenant de 1 à 18 atomes de carbone, un cycloalkyle en $C_6-C_{10}$, un aralkyle en $C_7-C_{10}$ ou

un radical phényle éventuellement porteur d'un halogène, d'un alkyle en $C_1-C_6$ ou d'un alcoxy en $C_1-C_6$, n est égal à 1 ou à 2 et
$HB^{\oplus}$ représente un radical répondant à la formule

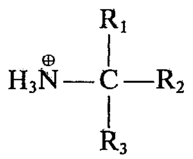

dans laquelle $R_1$, $R_2$ et $R_3$ représentent des radicaus alkyles contenant, ensemble, de 7 à 24 atomes de carbone,

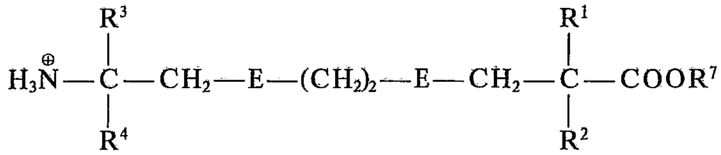

dans laquelle $R^1$ et $R^3$ représentent chacun, indépendamment l'un de l'autre, l'hydrogène ou un radical alkyle, linéaire ou ramifié, contenant de 1 à 8 atomes de carbone, $R^2$ représente un radical alkyle, linéaire ou ramifié, contenant de 1 à 8 atomes de carbone et $R^4$ représente un radical alkyle, linéaire ou ramifié, contenant de 1 à 8 atomes de carbone, ou encore $R^1$ et $R^2$, et/ou $R^3$ et $R^4$, forment ensemble et avec l'atome de carbone qui les unit un radical cycloaliphatique contenant de 4 à 8 atomes de carbone, et dans laquelle les E représentent chacun l'un des radicaux

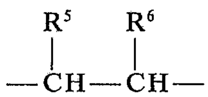 et 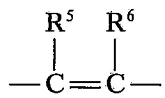

dans lesquels $R^5$ et $R^6$ représentent chacun, indépendamment l'un de l'autre, l'hydrogène ou un alkyle en $C_1-C_4$, et $R^7$ représente un alkyle, linéaire ou ramifié, contenant de 1 à 18 atomes de carbone.

2. Colorants azoiques à l'état de sels selon la revendication 1, dans lesquels $X_1$ représente un radical alkyle contenant de 1 à 4 atomes de carbone et $Y_1$ représente un groupe cyano.

3. Application des colorants sels selon la revendication 1 à la coloration de solutions organiques de polymères.

4. Polymères contenant des colorants sels selon la revendication 1.